# EUROPÄISCHE PATENTSCHRIFT

(11) **EP 3 933 261 B1**
(45) Veröffentlichungstag und Bekanntmachung des Hinweises auf die Patenterteilung: **19.06.2024**
(21) Anmeldenummer: 21173996.6
(22) Anmeldetag: 17.05.2021
(51) Int. Cl.: F21V 21/04, F21V 33/00, H04N 23/57, F21W 131/403, F21Y 115/10

(54) **EINBAULEUCHTE UND/ODER -KAMERA**
RECESSED LIGHT AND/OR CAMERA
LUMINAIRE ET/OU CAMÉRA INTÉGRÉ

(30) Priorität: 29.06.2020 DE 102020117066
(43) Veröffentlichungstag der Anmeldung: 05.01.2022
(73) Patentinhaber: Herbert Waldmann GmbH & Co. KG, 78056 Villingen-Schwenningen (DE)
(72) Erfinder: Eberhardt, Marcus, 78554 Aixheim (DE)
(74) Vertreter: Westphal, Mussgnug & Partner Patentanwälte mbB

(56) Entgegenhaltungen:
- CN-A- 107 426 636
- CN-A- 107 702 420
- CN-U- 208 794 349
- JP-U- S49 135 281
- KR-B1- 102 078 681

## Beschreibung

Die vorliegende Erfindung betrifft eine Einbauleuchte und/oder -kamera zur Anordnung in einer Montageöffnung einer Wandung einer Maschine mit den Merkmalen des Patentanspruchs 1.

Einbauleuchten und/oder -kameras sind aus dem Stand der Technik in unterschiedlichen Ausgestaltungen vorbekannt. Gattungsgemäße Einbauleuchten und/oder -kameras werden im Stand der Technik verwendet, um einen Innenraum einer Maschine zu beleuchten, um während eines Herstellungsprozesses in der Maschine beobachten zu können. Die Anforderungen an derartige Einbauleuchten und/oder -kameras sind hoch, da diese einerseits eine hohe Leistungsdichte aufweisen sollen und andererseits den Bedingungen in dem Innenraum der Maschine standhalten müssen. Die Beobachtung des Herstellungsprozesses innerhalb der Maschine kann dabei direkt durch einen optischen Zugang in der Wandung der Maschine erfolgen oder unmittelbar über eine Kamera, welche entweder analog oder digital das Geschehen innerhalb der Maschine erfasst.

Derartige Leuchten und/oder -kameras haben sich in der Vergangenheit bewährt, jedoch hat sich als Nachteil herausgestellt, dass die verwendeten Befestigungsmittel der Einbauleuchten und/oder -kameras eine zeitaufwändige Montage und Demontage zur Wartung erfordern und andererseits, dass die verwendeten Befestigungsmittel für die Einbauleuchte und/oder -kamera zu Ansammlungen von Verunreinigungen führen. Vibrationen können ein Lösen bzw. Lockern der verwendeten Befestigungsmittel verursachen und Spalten und Taschen bieten Platz für Ansammlungen von Keimen, wodurch der Einsatz in der Lebensmittelbranche nicht möglich ist.

Weiteren Stand der Technik bilden die Druckschriften CN 107 702 420 A, CN 107 426 636 A, CN 208 794 349 U, JP S49 135 281 U und KR 102 078 681 B1.

Hier setzt die vorliegende Erfindung an.

Der vorliegenden Erfindung liegt die Aufgabe zugrunde, die aus dem Stand der Technik bekannten Einbauleuchten und/oder -kameras zur Anordnung in einer Montageöffnung einer Wandung, insbesondere einer Innenwarnung einer Prozesskammer einer Maschine, in zweckmäßiger Weise zu verbessern und die aus dem Stand der Technik bekannten Nachteile zu beseitigen. Die Einbauleuchte und/oder -kamera soll werkzeugfrei in dem Innenraum einer Maschine befestigbar sein und durch Befestigungsmittel auch bei auftretenden Vibrationen und Erschütterungen sicher gehalten werden. Weiterhin soll eine stromlose Befestigung ermöglicht werden, und die Befestigungsmittel sollen Toleranzen der Wandung und der Montageöffnung ausgleichen können.

Diese Aufgaben werden durch eine Einbauleuchte und/oder -kamera zur Anordnung in einer Montageöffnung einer Wandung, insbesondere einer Innenwandung einer Maschine, mit den Merkmalen des Patentanspruchs 1 gelöst.

Weitere vorteilhafte Ausgestaltungen der vorliegenden Erfindung werden in den Unteransprüchen angegeben.

Die erfindungsgemäße Einbauleuchte und/oder -kamera zur Anordnung in einer Montageöffnung einer Wandung, insbesondere einer Innenwandung einer Maschine mit den Merkmalen des Patentanspruchs 1 weist ein Gehäuse mit einem Frontseitenbereich, einen Rückseitenbereich und mehrere Seitenwände auf, wobei im Frontseitenbereich mindestens ein Leuchtmittel und/oder eine Kamera angeordnet ist, wobei in dem Frontseitenbereich ein Anschlag angeordnet ist, der konfiguriert ist, auf der Wandung benachbart zu der Montageöffnung anzulegen, wobei mindestens ein Befestigungsmittel vorgesehen ist, dass über eine der Seitenwände ragt, und wobei das mindestens eine Befestigungsmittel konfiguriert ist, beim Einsetzen in die Montageöffnung fallenartig die Wandung in einem federgespannten Formschluss der Wandung zwischen dem mindestens einen Befestigungsmittel und dem Anschlag zu verklemmen.

Der vorliegenden Erfindung liegt die Idee zugrunde, eine werkzeuglose Montage der Einbauleuchte und/oder -kamera zu ermöglichen, wobei das mindestens eine Befestigungsmittel durch eine elastische Verformung beim Einsetzen in die Montageöffnung der Wandung zunächst elastisch zurückweicht und somit ein Einsetzen in die Montageöffnung zulässt und anschließend die Wandung fallenartig zur Bildung eines Formschluss hintergreift und den Anschlag federspannt gegen die Wandung drückt. Auch kann ein potentieller Spalt zwischen dem Anschlag und der Wandung durch die Federspannung geschlossen bzw. abgedichtet werden und es kann eine Zentrierung der Einbauleuchte und/oder - kamera in der Montageöffnung erfolgen. Durch den erfindungsgemäßen federgespannten Formschluss kann die Einbauleuchte und/oder -kamera auch für Wandungen mit unterschiedlichen Wandstärken verwendet werden, da das mindestens eine Befestigungsmittel aufgrund seiner Formgestaltung eine große Bandbreite von Wandstärken und größere Unterschiede in der Dicke der Wandung toleriert. Durch das schraubenlose Design ist eine Verwendung der Einbauleuchte und/oder -kamera in der Lebensmittelbranche möglich. Weiterhin liegt der vorliegenden Erfindung die Idee zu Grunde, ein Befestigungskonzept der Einbauleuchte und/oder -kamera vorzuschlagen, das vollständig verdeckt ist, wodurch sich keine Späne oder Schmutzpartikel ablagern können.

Eine bevorzugte Weiterbildung der vorliegenden Erfindung sieht vor, dass das mindestens eine Befestigungsmittel zwischen dem Frontseitenbereich und dem Rückseitenbereich auf einer der Seitenwände angeordnet ist. Bevorzugt ist das mindestens eine Befestigungsmittel ausschließlich im Bereich der jeweiligen Seitenwand angeordnet und ragt oder überlappt weder eine im Rückseitenbereich ausgebildete Rückseite noch eine im Frontseitenbereich ausgebildete Frontseite. Dadurch kann eine besonders kompakte Bauweise realisiert werden und ebenso eine ansprechende Gestaltung der Einbauleuchte und/oder -kamera möglich sein.

Nach einer weiteren Maßgabe der vorliegenden Erfindung ragt das mindestens eine Befestigungsmittel V- oder U-förmig über eine der Seitenwände. Das mindestens eine Befestigungsmittel kann nach Art einer ein- oder beidseitig abgeschrägten Falle ausgebildet sein, wobei eine erste abgeschrägte Flanke dem Rückseitenabschnitt zugewandt ist und eine zweite abgeschrägte Flanke dem Frontseitenabschnitt. Die erste abgeschrägte Flanke und die zweite abgeschrägte Flanke treffen an einer Kuppel zusammen, wobei die Kuppel am weitesten von der Seitenwand entfernt angeordnet ist. Über die erste abgeschrägte Flanke wird beim Einsetzten der Einbauleuchte und/oder -kamera das jeweilige mindestens eine Befestigungsmittel derart eingedrückt bis die Kuppel durch die Montageöffnung durchgeführt ist. Durch die Federkraft des V- oder U-förmigen Befestigungsmittels kann anschließend das Gehäuse federgespannt in die Montageöffnung eingedrückt werden, bis der Anschlag an der Wandung anliegt. Der Abstand der Kuppel zu der Seitenwand ist kleiner als ein Abstand zwischen einem freien Ende des Flansches und der Seitenwand.

Erfindungsgemäß ist vorgesehen, dass das mindestens eine Befestigungsmittel mindestens einen Schenkelfederabschnitt mit einem ersten Schenkel und einem zweiten Schenkel umfasst. Bevorzugter Weise ist der zweite Schenkel V- oder U-förmig ausgebildet und ragt über eine der Seitenwände hinaus, währenddessen der erste Schenkel an dem Gehäuse fixiert sein kann. Der zweite Schenkel ist bevorzugt entlang einer Hochachse angeordnet und kann V- oder U-förmig ausgebildet sein, wobei die Hochachse bevorzugt dem Normalenvektor einer in dem Frontseitenbereich angeordneten Frontseite entspricht.

Der mindestens eine Schenkelfederabschnitt weist einen Schraubenfederabschnitt mit einer Windungsrichtung auf. Bevorzugt weist der Schraubenfederabschnitt eine Mehrzahl von Windungen auf, wobei bevorzugter Weise beim Einsetzen der Einbauleuchte und/oder -kamera der Schraubenfederabschnitt entgegen der Windungsrichtung elastisch belastet wird.

Nach Maßgabe einer weiteren vorteilhaften Ausgestaltung der vorliegenden Erfindung weist das mindestens eine Befestigungsmittel zwei Schenkelfederabschnitte auf, die durch einen Bügelabschnitt verbunden sind. Durch den Bügelabschnitt können die jeweils zweiten Schenkel parallel und beabstandet an der jeweiligen Seitenwand des Gehäuses angeordnet sein. Die zwei Schenkelfederabschnitte ziehen den Anschlag der Einbauleuchte und/oder -kamera gleichmäßig und verteilt gegen die Wandung. Gemäß einer weiteren vorteilhaften Ausgestaltung der vorliegenden Erfindung sind der Schenkelfederabschnitt und der Bügelabschnitt miteinander verbunden und der Bügelabschnitt ist abgewinkelt zu dem Schenkelfederabschnitt angeordnet. Der Bügelabschnitt kann in einer Weiterbildung der Erfindung senkrecht zum Schenkelfederabschnitt angeordnet sein und kann weiterhin zumindest abschnittsweise an der jeweiligen Seitenwand anliegen. Bevorzugt kann beim Eindrücken des mindestens einen Befestigungsmittels an der Seitenwand das Befestigungsmittel eine Ausweichbewegung vornehmen.

Eine Weiterbildung der vorliegenden Erfindung sieht vor, dass der Bügelabschnitt gegen die jeweilige Seitenwand gedrückt wird. Insbesondere ist es bevorzugt, wenn der Bügelabschnitt entgegen der jeweiligen Windungsrichtung des Schenkelfederabschnitts gegen die jeweilige Seitenwand gedrückt wird, wobei bevorzugt das mindestens eine Befestigungsmittel durch eine Verklemmung zwischen dem ersten Schenkel und dem Bügelabschnitt an dem Gehäuse gehalten wird.

Gemäß der vorliegenden Erfindung ist das mindestens eine Befestigungsmittel in einer Aussparung in der Seitenwand des Gehäuses bereichsweise eingesetzt. Die Aussparung ist bevorzugt beabstandet von dem Frontseitenabschnitt und dem Rückseitenabschnitt in die jeweilige Außenwand eingearbeitet oder eingeformt und korrespondiert mit der Form des mindestens einen Befestigungsmittels. Zumindest der Schraubenfederabschnitt des Schenkelfederabschnitts ist innerhalb der Aussparung angeordnet und lediglich der zweite, bevorzugt V- oder U-förmige, Schenkel ragt aus der Aussparung heraus und greift über die jeweilige Seitenwand. Für den Fall, dass mehrere Befestigungsmittel, auch auf unterschiedlichen Seitenwänden der Einbauleuchte und/oder -kamera vorgesehen sind, ist es bevorzugt, wenn für jedes der Befestigungsmittel jeweils eine Aussparung vorgesehen ist. Ebenfalls ist es denkbar, dass für das jeweilige Befestigungsmittel zwei Aussparungen vorgesehen sind. Eine solche Ausgestaltung kann dann vorteilhaft sein, wenn das mindestens eine Befestigungsmittel zwei Schenkelfederabschnitte und einen Bügelabschnitt aufweist und jeweils eine Aussparung für den jeweiligen Schenkelfederabschnitt vorgesehen ist.

Die vorliegenden Erfindung sieht ferner vor, dass die Aussparung mindestens eine Hinterschneidung aufweist, und dass das mindestens eine Befestigungsmittel durch einen Formschluss in der Aussparung befestigbar ist. Das freie Ende des ersten Schenkels des Schenkelfederabschnitts greift in die Hinterschneidung.

Weiterhin ist es vorteilhaft, wenn die mindestens eine Hinterschneidung durch eine Ausnehmung gebildet ist, die den Rückseitenbereich mit der Aussparung verbindet. Die Ausnehmung kann folglich von dem Rückseitenbereich eingearbeitet oder eingeformt werden, wodurch sich eine besonders einfache Herstellung der Hinterschneidung in der Aussparung ergibt.

Weiterhin hat es sich als vorteilhaft erwiesen, wenn der Anschlag als ein umlaufender Flansch im Frontseitenbereich ausgebildet ist. Der umlaufende Flansch kann auf der dem Rückseitenbereich zugewandten Seite Dichtmittel aufweisen, durch die im montierten Zustand der Einbauleuchte und/oder -kamera die Dichtwirkung zwischen dem Anschlag und der Wandung erhöht wird. Das Dichtmittel kann beispielsweise einen Moosgummiring, einen Dichtring, eine Gummi-Dichtlippe, einen geschäumten Kunststoff oder dergleichen umfassen und kann innerhalb einer Nut auf der dem Rückseitenbereich zugewandten Seite des umlaufenden Flansches angeordnet bzw. befestigt sein. Insbesondere kann es vorteilhaft sein, wenn das Dichtmittel ein O-Ring ist und auf der dem Rückseitenbereich zugewandten Seite des Anschlages eine Nut, insbesondere eine Trapeznut, ausgebildet ist, in die das oben beschriebene Dichtmittel eingesetzt werden kann.

Darüber hinaus hat es sich in einer Weiterbildung der vorliegenden Erfindung als vorteilhaft erwiesen, wenn auf der dem Rückseitenreich zugewandten Seite des umlaufenden Flansches eine an das Befestigungsmittel angepasste Ausnehmung angeordnet ist. Die angepasste Ausnehmung kann vorteilhafter Weise konfiguriert sein, bei der Ausweichbewegung des jeweiligen mindestens einen Befestigungsmittels das mindestens eine Befestigungsmittel zumindest teilweise aufzunehmen, wodurch die Bauweise der vorliegenden und erfindungsgemäßen Einbauleuchte und/oder -kamera besonders kompakt ist.

Nach Maßgabe einer bevorzugten Weiterbildung ist auf der dem Rückseitenbereich zugewandten Seite des Anschlags ein Demontageschlitz angeordnet, der es ermöglicht, die Einbauleuchte und/oder -kamera von der Wandung zu lösen. Insbesondere ist es bevorzugt, wenn der Demontageschlitz ein Werkzeug aufnehmen kann, durch welches die Einbauleuchte und/oder -kamera durch einen Hebelbewegung demontiert werden kann.

Eine Weiterbildung der vorliegenden Erfindung sieht vor, dass in dem Gehäuse das mindestens eine Leuchtmittel vorgesehen ist, und dass in dem Frontseitenbereich eine Gehäuseöffnung vorgesehen ist, durch die das von dem mindestens einen Leuchtmittel emittierte Licht aus dem Gehäuse austreten kann. Die mindestens eine Gehäuseöffnung ist vorzugsweise in einer Ebene auf einer Frontseite ausgebildet, wobei bevorzugt die Gehäuseöffnung durch eine lichtdurchlässige Platte dicht verschlossen ist. Das mindestens eine Leuchtmittel kann vorzugsweise ein LED-Leuchtmittel sein. Darüber hinaus hat es sich als vorteilhaft erwiesen, wenn eine Mehrzahl von Leuchtmitteln in einem Raster vorgesehen sind, und in einer Leuchtmittelebene parallel und beabstandet zu der Frontseite angeordnet sind. Insbesondere ist es bevorzugt, wenn die Leuchtmittel in der Leuchtmittelebene parallel zu der Frontseite beweglich in dem Gehäuse angeordnet sind und durch geeignete Einstellmittel die Leuchtmittel in der Leuchtmittelebene beweglich sind.

Darüber hinaus ist es vorteilhaft, wenn in der Gehäuseöffnung die lichtdurchlässige Platte für das mindestens eine Leuchtmittel jeweils einen Optikabschnitt aufweist. Der Optikabschnitt ist für das jeweilige Leuchtmittel konfiguriert, die Verbreitung des durch die Gehäuseöffnung emittierten Lichtes vorzugeben, und einen Hauptabstrahlwinkel von ±45° einstellen zu können. Eine derartig konfigurierte Einbauleuchte muss folglich nicht mehr an der Wandung verschwenkt werden, um das Licht auf den zu beleuchtenden Ort zu lenken.

Darüber hinaus ist es vorteilhaft, wenn die mindestens eine Kamera in bzw. innerhalb der Gehäuseöffnung angeordnet ist. Die Kamera kann in einer bevorzugten Weiterbildung in der Leuchtmittelebene von Leuchtmitteln umgeben sein. Das durch die Kamera beobachtete Objekt kann durch die Leuchtmittel bestmöglich ausgeleuchtet werden und eine uneingeschränkte Beobachtung des Herstellungsprozesses in der Maschine ist mittels der Kamera möglich.

Nachfolgend wird unter Bezugnahme auf die begleitende Zeichnung ein Ausführungsbeispiel einer erfindungsgemäßen Einbauleuchte und/oder -kamera im Detail beschrieben. Es zeigen:
- Figur 1: eine vereinfachte perspektivische Explosionsdarstellung einer Einbauleuchte und einer Wandung mit einer Montageöffnung, in die die Einbauleuchte eingesetzt werden kann und mittels Befestigungsmittel fixiert werden kann,
- Figur 2: eine Schnittdarstellung der Einbauleuchte und der Wandung gemäß Figur 1,
- Figur 3: eine Schnittdarstellung der Einbauleuchte und der Wandung, wobei die Einbauleuchte in die Montageöffnung eingesetzt ist,
- Figur 4: eine Draufsicht auf die Rückseite der Einbauleuchte gemäß den Figuren 1-4, und
- Figur 5: eine Weiterbildung der Einbauleuchte gemäß den Figuren 1-4, wobei die Einbauleuchte eine Kamera aufweist.

Nachfolgend werden gleiche oder funktional gleiche Bauteile in einem Ausführungsbeispiel mit gleichen Bezugszeichen gekennzeichnet. Der Übersichtlichkeit halber sind in den einzelnen Figuren nicht alle gleichen oder funktional gleichen Teile mit einer Bezugsziffer versehen.

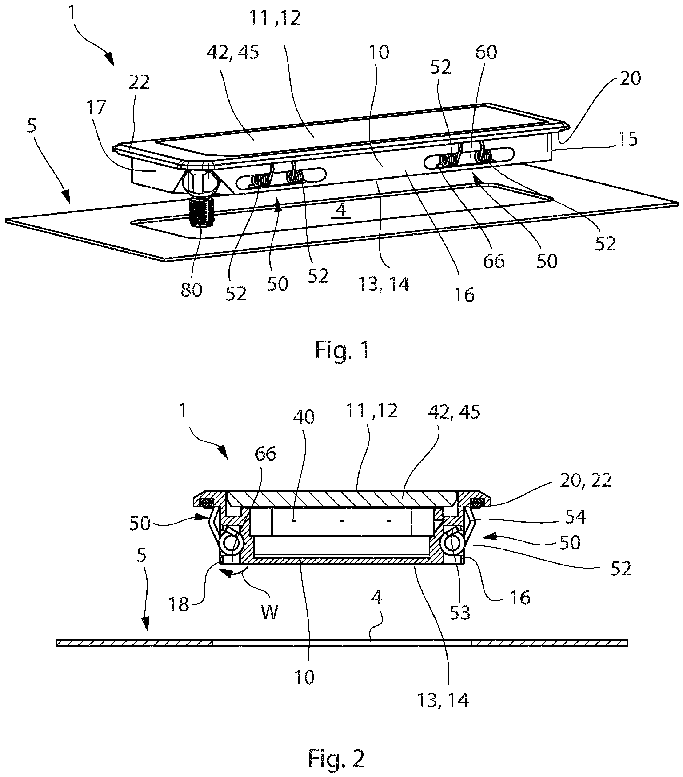

Die Explosionsdarstellung gemäß Figur 1 zeigt eine Einbauleuchte und/oder -kamera 1, welche konfiguriert ist, in eine Aufnahmeöffnung 4 einer Wandung 5 eingesetzt zu werden. Die Wandung 5 kann eine Innenwandung einer (nicht dargestellten) Maschine sein, die eine Prozesskammer, in der die Bearbeitung von Werkstücken stattfinden kann, zumindest bereichsweise einschließt. Derartige Wandungen 5 können aus einem plattenförmigen Werkstoff mit einer Wandstärke t gebildet sein, wobei der Werkstoff typischerweise ein metallischer Werkstoff ist. Die Wandung 5 weist eine erste Seite und eine der ersten Seite gegenüberliegende zweite Seite auf, wobei die erste Seite der Wandung 5 der Prozesskammer zugewandt ist.

Die Aufnahmeöffnung 4 kann quaderförmig ausgebildet sein, wobei die Kanten verrundet sein können. Die Montageöffnung 4 weist eine Breite B3 und eine Länge L2 auf.

Aus Gründen der Vereinfachung wird zunächst die Einbauleuchte und/oder -kamera 1 in der Konfiguration als reine Einbauleuchte 1 beschrieben und ebenso bezeichnet.

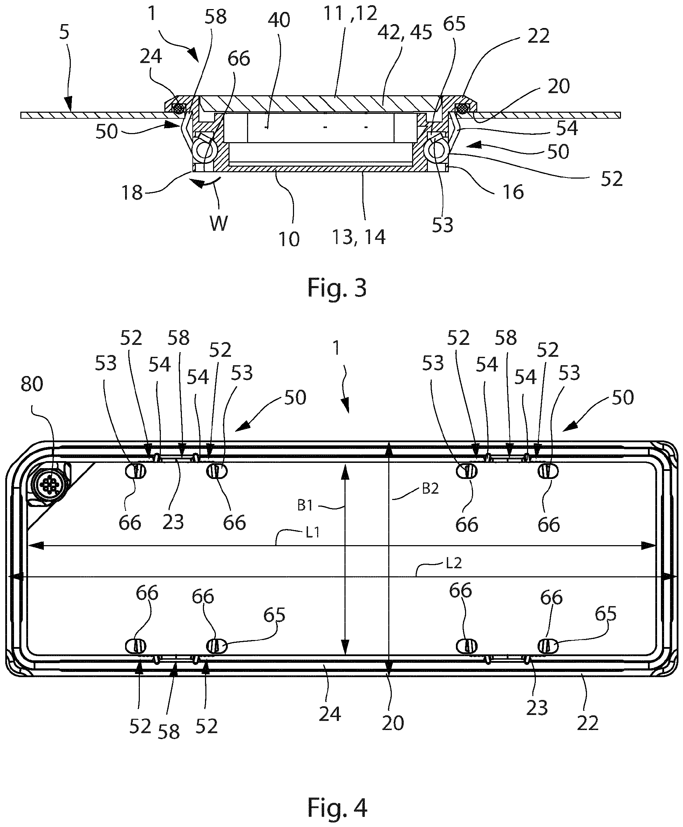

Die Einbauleuchte 1 umfasst ein Gehäuse 10 mit einem Frontseitenbereich 11 und einem Rückseitenbereich 13, wobei der Rückseitenbereich 13 durch die Montageöffnung 4 ragen kann. Der Rückseitenbereich 13 weist eine Rückseite 14 und der Frontseitenbereich 11 eine Frontseite 12 auf, wobei im eingesetzten Zustand der Einbauleuchte 1 gemäß Figur 3 die Frontseite 12 auf der ersten Seite der Wandung 5 angeordnet ist und die Rückseite 14 auf der gegenüberliegenden zweiten Seite der Wandung 5.

Das Gehäuse 10 ist vorzugsweise quaderförmig und kann wie dargestellt vier Seitenwände 15, 16, 17, 18 aufweisen, wobei das Gehäuse 10 eine Breite B1, eine Länge L1 und eine Höhe H1 aufweist. An dem Frontseitenbereich 11 weist das Gehäuse 10 einen bevorzugt umlaufenden Flansch 22 auf, der von den Seitenwänden 15, 16, 17, 18 absteht und einen Anschlag 20 bildet. Wie der Figur 4 zu entnehmen ist, weist die Einbauleuchte 1 im Frontseitenbereich 11 mit dem Anschlag 20 gemessen eine Breite B2 und eine Länge L2 auf, wobei die Breite B2 größer ist als die Breite B1 und die Länge L2 größer ist als die Länge L1. Der Anschlag 20 gibt vor, wie weit das Gehäuse 10 durch die Montageöffnung 4 in die Wandung 5 eintauchen kann.

In dem Gehäuse 10 können ein oder mehrere Leuchtmittel 40 angeordnet sein, wobei bevorzugt die Leuchtmittel 40 LED-Leuchtmittel sind, die auf einer oder mehreren Platten bevorzugt in einem Raster angeordnet sind. Ferner weist das Gehäuse 10 in dem Frontseitenbereich eine Gehäuseöffnung 42 auf, durch die das von den Leuchtmittel 40 emittierte Licht abgestrahlt werden kann. Die Gehäuseöffnung 42 kann durch eine Platte 45 in dem Frontseitenbereich 11 verschlossen sein, wobei die Platte 45 vorzugsweise eine lichtdurchlässige Platte 45 ist.

Um die Einbauleuchte 1 bzw. die Einbauleuchte und/oder -kamera 1 in der Montageöffnung 4 zu befestigen, sind mehrere Befestigungsmittel 50 vorgesehen, die aus den Seitenwänden 16, 18 ragen. In einer bevorzugten Ausgestaltung ist jeweils mindestens ein Befestigungsmittel 50 auf gegenüberliegenden Seitenwänden 15, 16, 17, 18 angeordnet, also auf den Seitenwänden 16, 18 und/oder auf den Seitenwänden 15 und 17.

Die Befestigungsmittel 50 sind in der jeweiligen Seitenwand 15, 16, 17, 18 in eine Aussparung 60 eingesetzt, und ragen aus der Aussparung 60 über die jeweilige Seitenwand 15, 16, 17, 18.

Die Aussparung 60 kann als halbrunde Nut, beispielsweise durch eine Hohlkehlfräsung oder eine Tellerfräsung, in der Seitenwand 15, 16, 17, 18 des Gehäuses 10 eingearbeitet oder eingeformt sein und kann weiterhin in einer Längsrichtung auslaufen. Die halbrunde Nut weist einen Durchmesser D2 auf, wobei die Tiefe der halbrunden Nut vorzugsweise größer als ½ D2 und kleiner als D2 ist.

In der Aussparung 60 können Hinterschneidungen 65 ausgebildet sein, die bevorzugt dem Frontseitenbereich 11 und/oder dem Rückseitenbereich 14 zugewandt sind. Die jeweilige Hinterschneidung 65 kann - wie den Figuren 2-4 entnommen werden kann - durch eine Ausnehmung 66 gebildet werden, die von dem Rückseitenbereich bzw. der Rückseite 13 in das Gehäuse 10 eingearbeitet oder eingeformt ist und die Rückseite 13 mit der Aussparung 60 verbindet.

Das Befestigungsmittel 50 ragt aus der Aussparung 60 und überragt benachbart zu der Aussparung 60 die jeweilige Seitenwand 15, 16, 17, 18 V- oder U-förmig mit zwei Flanken, die sich in einer Kuppel treffen. Durch zwei Flanken kann das Befestigungsmittel 50 nach Art einer Türfalle beim Einsetzen der Einbauleuchte und/oder -kamera 1 eine elastische Ausweichbewegung vornehmen. Dabei wird über eine erste Flanke das Befestigungsmittel 50 elastisch in Richtung der jeweiligen Seitenwand 15, 16, 17, 18 gedrückt. Sobald die Kuppel die Montageöffnung 4 der Wandung passiert hat, federt das Befestigungsmittel 50 zurück und presst mit der zweiten Flanke die Wandung 5 in einen federgespannten Formschluss, wodurch die Wandung 5 zwischen dem Anschlag 20 und dem Befestigungsmittel 50 eingeklemmt wird. Über die Befestigungsmittel 50 kann die Einbauleuchte und/oder -kamera in die Wandung 5 gezogen werden und zentriert sich automatisch mittig zu der Montageöffnung 6. Die Kuppel steht in einem Abstand von der jeweiligen Seitenwand 15, 16, 17, 18 ab und die Breite B1 oder die Länge L1 und der zweifache Abstand der Kuppel ist größer als eine Breite oder Länge der Montageöffnung 6. Allerdings ist die Breite B1 bzw. die Länge L1 und der zweifache Abstand der Kuppel von der jeweiligen Seitenwand 15, 16, 17, 18 kleiner als die Breite B2 bzw. die Länge L2. Vorzugsweise steht die Kuppe ca. 3mm bis 10mm, vorzugsweise ca. 5mm von der der jeweiligen Seitenwand 15, 16, 17, 18 ab.

Das Befestigungsmittel 50 kann - wie in den Figuren 1-5 gezeigt ist - zwei Schenkelfederabschnitte 52 und einen Bügelabschnitt 58 aufweisen. Die zwei Schenkelfederabschnitte 52 sind beabstandet zueinander angeordnet und sind über den Bügelabschnitt 58 die miteinander verbunden. Der Bügelabschnitt 58 ist im Wesentlichen in der Längsrichtung ausgerichtet.

Der Schenkelfederabschnitt 52 weist einen ersten Schenkel 53 und einen zweiten Schenkel 54 auf, wobei zwischen dem ersten Schenkel 53 und dem zweiten Schenkel 54 ein Schraubenfederabschnitt angeordnet sein kann, der eine Wicklungsrichtung W aufweist. Der erste Schenkel 53 bildet ein freies Ende, während dessen der zweite Schenkel 54 mit dem Bügelabschnitt 58 verbunden ist.

Der Schraubenfederabschnitt des Schenkelfederabschnitts 52 weist einen Durchmesser D1 auf, wobei der Durchmesser D1 in etwa dem Durchmesser D2 der halbrunden Nut bzw. Aussparung 60 entspricht.

Der erste Schenkel 53 steht von dem Schraubenfederabschnitt ab und greift in die Hinterschneidung 65 in der Aussparung 60, wie in den Figuren 2 und 3 gezeigt ist.

Der zweite Schenkel 54 ist V-förmig ausgebildet und bildet die erste Flanke, die zweite Flanke und die Kuppel des Befestigungsmittels 50 aus. Der zweite Schenkel 54 ragt geneigt aus der Aussparung 60 und überragt derart die jeweilige Seitenwand 15, 16, 17, 18, dass die Kuppel in Richtung des Frontseitenbereichs 11 jenseits der Aussparung 60 angeordnet ist. Der Bügelabschnitt 58 wird durch die elastische Federkraft in der Wickelrichtung W gegen die jeweilige Seitenwand 15, 16, 17, 18 gedrückt.

Der Bügelabschnitt 58 ist abgewinkelt zu dem zweiten Schenkel 54 angeordnet und liegt an der jeweiligen Seitenwand 15, 16, 17, 18 an. Darüber hinaus kann der Bügelabschnitt 58 an dem Anschlag 20 bzw. dem Flansch 22 anliegen, wobei bevorzugt in den Flansch 22 eine an den Bügelabschnitt 58 angepasste Ausnehmung 23 eingearbeitet oder eingeformt ist, die den Bügelabschnitt 58 aufnimmt. Der Bügelabschnitt 58 kann durch die Federkraft des Befestigungsmittels 50 gegen den Anschlag 20 gedrückt werden.

Durch den Formschluss des ersten Schenkels 53 in der Hinterschneidung 65 und/oder den Formschluss des Bügelabschnitts 58 in der Ausnehmung 23 kann das Befestigungsmittel 50 in die Aussparung 60 eingeklipst werden und ist dort verlustsicher gehalten.

Unter Bezugnahme auf Figur 4 ist ersichtlich, dass die Einbauleuchte 1 und/oder -kamera einen elektrischen Anschluss 80 aufweist, wobei der elektrische Anschluss auf einer um 45° zu der Rückseite 14 geneigten Fläche 85 an einer Kante zwischen zwei Seitenwänden 15, 16, 17, 18 angeordnet ist. Der elektrische Anschluss 80 ist an der geneigten Fläche 85 drehbeweglich angeordnet, wobei der elektrische Anschluss 80 vorzugsweise um 180° an der geneigten Fläche 85 verdrehbar ist.

Der elektrische Anschluss kann ein- oder mehrpolig sein und dient einerseits der Bestromung der Einbauleuchte und/oder - kamera 1 und/oder einem Datenaustausch.

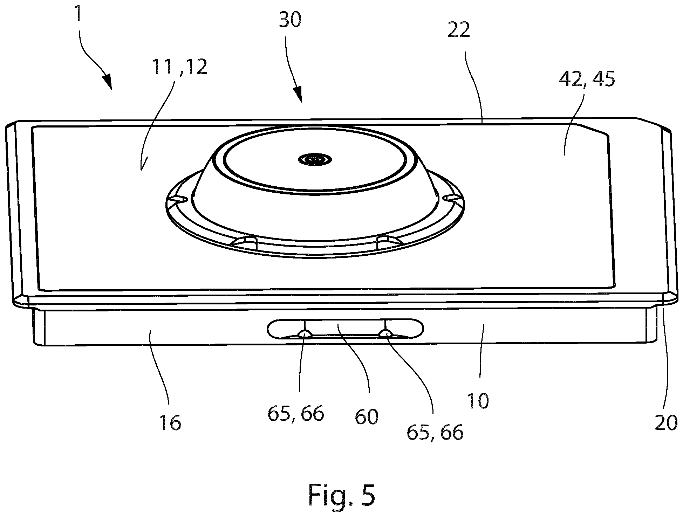

Wie der Weiterbildung gemäß Figur 5 zu entnehmen ist, kann ebenfalls eine Kamera 30 vorgesehen sein, die in die Gehäuseöffnung 42 eingesetzt ist. Die Kamera 30 kann - wie in Figur 5 dargestellt ist - derart in der Gehäuseöffnung 42 angeordnet sein, dass die Kamera 30 im Frontseitenbereich von Leuchtmitteln 40 umgeben ist. Diese Konfiguration entspricht einer Kombination einer Einbauleuchte und -kamera 1, wobei in dieser Darstellung die Befestigungsmittel 50 nicht eingezeichnet sind. Alternativ in einer nicht dargestellten weiteren Weiterbildung kann das Gehäuse 10 mindestens eine Kamera 30 aufnehmen und keine Leuchtmittel 40 aufweisen, wobei diese Konfiguration einer Einbaukamera 1 entspricht.

### Bezugszeichenliste

- 1: Einbauleuchte und/oder -kamera
- 4: Montageöffnung
- 5: Wandung
- 10: Gehäuse
- 11: Frontseite
- 12: Frontseitenbereich
- 13: Rückseite
- 14: Rückseitenbereich
- 15: Seitenwand
- 16: Seitenwand
- 17: Seitenwand
- 18: Seitenwand
- 20: Anschlag
- 22: Flansch
- 30: Kamera
- 40: Leuchtmittel
- 42: Gehäuseöffnung
- 45: Platte
- 50: Befestigungsmittel
- 52: Schenkelfederabschnitt
- 53: erster Schenkel
- 54: zweiter Schenkel
- 58: Bügelabschnitt
- 60: Aussparung
- 65: Ausnehmung

- B: Breite
- H: Höhe
- L: Länge
- W: Wickelrichtung

## Patentansprüche

1. Einbauleuchte und/oder -kamera (1) zur Anordnung in einer Montageöffnung (4) einer Wandung (5), insbesondere einer Innenwandung einer Maschine, aufweisend:
- ein Gehäuse (10) mit einem Frontseitenbereich (12), einem Rückseitenbereich (14) und Seitenwänden (15, 16, 17, 18),
- wobei im Frontseitenbereich (12) mindestens eine Kamera (30) und/oder mindestens ein Leuchtmittel (40) angeordnet sind,
- wobei in dem Frontseitenbereich (12) ein Anschlag (20) angeordnet ist,
- wobei mindestens ein Befestigungsmittel (50) vorgesehen ist, dass über eine der Seitenwände (15, 16, 17, 18) ragt, und
- wobei das mindestens eine Befestigungsmittel (50) konfiguriert ist, beim Einsetzen in die Montageöffnung (4) fallenartig einen federgespannten Formschluss der Wandung (5) zwischen dem Anschlag (20) und dem mindestens einen Befestigungsmittel (50) zu bilden
- wobei das mindestens eine Befestigungsmittel (50) mindestens einen Schenkelfederabschnitt (52) mit einem ersten Schenkel (53) und einem zweiten Schenkel (54) umfasst
- wobei der mindestens eine Schenkelfederabschnitt (52) einen Schraubenfederabschnitt (55) mit einer Windungsrichtung (W) aufweist, **dadurch gekennzeichnet**
- _ dass zumindest der Schraubenfederabschnitt (55) des Schenkelfederabschnitts (52) innerhalb einer Aussparung (60) in der Seitenwand (15, 16, 17, 18) angeordnet ist und lediglich der zweite Schenkel (54) aus der Aussparung (60) herausragt und über die jeweilige Seitenwand (15, 16, 17, 18) greift, und
- dass die Aussparung (60) mindestens eine Hinterschneidung (65) aufweist, und dass durch einen Formschluss des ersten Schenkels (53) in der Hinterschneidung (65) das Befestigungsmittel (50) in die Aussparung (60) eingeklipst und ist dort verlustsicher gehalten werden kann.

2. Einbauleuchte und/oder -kamera (1) nach Anspruch 1, **dadurch gekennzeichnet, dass** das mindestens eine Befestigungsmittel (50) zwischen dem Frontseitenbereich (12) und dem Rückseitenbereich (14) angeordnet ist.

3. Einbauleuchte und/oder -kamera (1) nach einem der vorgenannten Ansprüche,
**dadurch gekennzeichnet, dass** das mindestens eine Befestigungsmittel (50) V- oder U-förmig über eine der Seitenwände (15, 16, 17, 18) ragt.

4. Einbauleuchte und/oder -kamera (1) nach einem der Ansprüche 1 bis 3,
**dadurch gekennzeichnet, dass** zwei Schenkelfederabschnitte (52) vorgesehen sind, die durch einen Bügelabschnitt (58) verbunden werden.

5. Einbauleuchte und/oder -kamera (1) nach Anspruch 4, **dadurch gekennzeichnet, dass** der Bügelabschnitt (58) abgewinkelt zu dem Schenkelfederabschnitt (52) angeordnet ist und dass der Bügelabschnitt (58) an der jeweiligen Seitenwand (15, 16, 17, 18) anliegt.

6. Einbauleuchte und/oder -kamera (1) nach einem der Ansprüche 4 oder 5,
**dadurch gekennzeichnet, dass** der Bügelabschnitt (58) gegen die jeweilige Seitenwand (15, 16, 17, 18) gedrückt wird.

7. Einbauleuchte und/oder -kamera (1) nach einem der vorgenannten Ansprüche,
**dadurch gekennzeichnet, dass** die mindestens eine Hinterschneidung (65) durch eine Ausnehmung (66) gebildet ist, die den Rückseitenbereich (14) mit der einen Aussparung (60) verbindet.

8. Einbauleuchte und/oder -kamera (1) nach einem der vorgenannten Ansprüche,
**dadurch gekennzeichnet, dass** der Anschlag (20) als ein bevorzugt umlaufender Flansch (22) in dem Frontseitenbereich (12) ausgebildet ist.

9. Einbauleuchte und/oder -kamera (1) nach Anspruch 8, **dadurch gekennzeichnet, dass** auf der dem Rückseitenbereich zugewandten Seite des umlaufenden Flanschs (22) eine an das Befestigungsmittel (50) angepasste Ausnehmung (23) angeordnet ist.

10. Einbauleuchte und/oder -kamera (1) nach einem der vorgenannten Ansprüche,
**dadurch gekennzeichnet, dass** in dem Gehäuse (10) das mindestens eine Leuchtmittel (40) vorgesehen ist und dass auf einer Frontseite (11) eine Gehäuseöffnung (42) vorgesehen ist, aus der das von dem Leuchtmittel (40) emittierte Licht aus dem Gehäuse (10) austreten kann.

11. Einbauleuchte und/oder -kamera (1) nach einem der vorgenannten Ansprüche,
**dadurch gekennzeichnet, dass** mehrere Leuchtmittel (40) in einem Raster vorgesehen sind, und dass die Leuchtmittel (40) in einer Ebene beweglich angeordnet sind sind.

12. Einbauleuchte und/oder -kamera (1) nach einem der vorgenannten Ansprüche,
**dadurch gekennzeichnet, dass** in der Gehäuseöffnung (42) eine lichtdurchlässige Platte (45) angeordnet ist, die für das mindestens eine Leuchtmittel (40) einen Optikabschnitt aufweist.

13. Einbauleuchte und/oder -kamera (1) nach einem der vorgenannten Ansprüche,
**dadurch gekennzeichnet, dass** die Kamera (30) in der Gehäuseöffnung (42) angeordnet ist.

## Claims

1. Recessed lighting fixture and/or recessed camera (1) for arrangement in a mounting opening (4) of a walling (5), in particular, of the inner walling of a machine, comprising:
- a housing (10) having a front side section (12), a back side section (14) and side walls (15, 16, 17, 18),
- wherein, in the front side section (12), at least one camera (30) and/or at least one light source (40) are arranged,
- wherein, in the front side section (12), an end stop (20) is arranged,
- wherein at least one attachment means (50) is provided which protrudes over one of the side walls (15, 16, 17, 18), and
- wherein the at least one attachment means (50) is configured to form a trap-like, spring-loaded form fit of the walling between the end stop (20) and the at least one attachment means (50) when inserted into the mounting opening (4),
- wherein the at least one attachment means (50) includes at least one leg spring section (52) having a first leg (53) and a second leg (54),
- wherein the at least one leg spring section (52) comprises a coil spring section (55) having a direction of winding (W),
**characterized in that**
at least the coil spring section (55) of the leg spring section (52) is arranged inside a cutout (60) in the side wall (15, 16, 17, 18) and only the second leg (54) protrudes from the cutout (60) and reaches over the respective side wall (15, 16, 17, 18), and **in that** the cutout (60) comprises at least one undercut (65), and **in that**, by means of a form fit of the first leg (53) in the undercut (65), the attachment means (50) snaps into the cutout (60) and can be securely held in place there.

2. Recessed lighting fixture and/or recessed camera (1) in accordance with claim 1, **characterized in that**
the at least one attachment means (50) is arranged between the front side section (12) and the back side section (14).

3. Recessed lighting fixture and/or recessed camera (1) in accordance with either of the preceding claims,
**characterized in that**
the at least one attachment means (50) protrudes in a V-shape or in a U-shape over one of the side walls (15, 16, 17, 18).

4. Recessed lighting fixture and/or recessed camera (1) in accordance with any of the claims 1 to 3,
**characterized in that**
two leg spring section (52) are provided which are connected by means of a bracket section (58).

5. Recessed lighting fixture and/or recessed camera (1) in accordance with claim 4, **characterized in that**
the bracket section (58) is arranged at an angle toward the leg spring section (52) and **in that** the bracket section (58) rests against the respective side wall (15, 16, 17, 18).

6. Recessed lighting fixture and/or recessed camera (1) in accordance with either of claims 4 or 5,
**characterized in that**
the bracket section (58) is pressed against the respective side wall (15, 16, 17, 18).

7. Recessed lighting fixture and/or recessed camera (1) in accordance with any of the preceding claims,
**characterized in that**
the at least one undercut (65) is formed by an opening (66) which connects the back side section (14) to the cutout (60).

8. Recessed lighting fixture and/or recessed camera (1) in accordance with any of the preceding claims,
**characterized in that**
the end stop (20) is implemented as a preferably circumferential flange (22) in the front side section (12).

9. Recessed lighting fixture and/or recessed camera (1) in accordance with claim 8, **characterized in that**,
on the side of the circumferential flange (22) which faces the back side section, an opening (23) is arranged which is adapted to the attachment means (50).

10. Recessed lighting fixture and/or recessed camera (1) in accordance with any of the preceding claims,
**characterized in that**
the at least one lighting source (40) is provided in the housing (10), and **in that** a housing opening (42) is provided on the front side (11) from which the light emitted from the light source (40) can exit the housing (10).

11. Recessed lighting fixture and/or recessed camera (1) in accordance with any of the preceding claims,
**characterized in that**
numerous light sources (40) are provided on a grid, and **in that** the light sources (40) are arranged moveably in one plane.

12. Recessed lighting fixture and/or recessed camera (1) in accordance with any of the preceding claims,
**characterized in that**
a translucent plate (45) is arranged in the housing opening (42) which comprises an optical section for the at least one light source (40).

13. Recessed lighting fixture and/or recessed camera (1) in accordance with any of the preceding claims,
**characterized in that**
the camera (30) is arranged in the housing opening (42).

## Revendications

1. Luminaire et/ou camera intégrés (1) pour être installés dans une ouverture de montage (4) d'une paroi (5), notamment de la paroi intérieure d'une machine comprenant :
- un boîtier (10) avec un côté avant (12), un côté arrière (14) et des parois latérales (15, 16, 17, 18),
- au moins une caméra (30) et/ou au moins un moyen d'éclairage (40) installés dans le côté avant (12),
- une butée (20) prévue dans le côté avant (12),
- au moins un moyen de fixation (50) qui dépasse de l'une des parois latérales (15, 16, 17, 18), et
- au moins le moyen de fixation (50) configuré pour former entre la butée (20) et au moins le moyen de fixation (50), par la mise en place dans l'ouverture de montage (4), une liaison par la forme, précontrainte par ressort, en forme de prise,
- le moyen de fixation (50) ayant au moins un segment de ressort à branches (52) ayant une première branche (53) et une seconde branche (54),
- au moins le segment de ressort à branches (52) a un segment de ressort hélicoïdal (55) avec une orientation de spires (W),
**caractérisé en ce que**
- au moins le segment de ressort hélicoïdal (55) du segment de ressort à branches (52) est dans un évidement (60) de la paroi latérale (15, 16, 17, 18) et uniquement la seconde branche (54) dépasse de l'évidement (60) et vient prendre sur la paroi latérale respective (15, 16, 17, 18), et
- l'évidement (60) a au moins une contredépouille (65), et
le moyen de fixation (50) est enclipsé dans l'évidement (60) en y étant tenu sans risque de perte par la liaison par la forme de la première branche (53) dans la contredépouille (65).

2. Luminaire et/ou camera intégrés (1) selon la revendication 1,
**caractérisé en ce que**
au moins le moyen de fixation (50) est entre le côté avant (12) et le côté arrière (14).

3. Luminaire et/ou camera intégrés (1) selon l'une des revendications précédentes,
**caractérisé en ce que**
au moins le moyen de fixation (50) dépasse par une forme en V ou en U de l'une des parois latérales (15, 16, 17, 18).

4. Luminaire et/ou camera intégrés (1) selon l'une des revendications 1 à 3,
**caractérisé en ce qu'**il comporte
deux segments de ressort à branches (52) reliés par un segment en arceau (58).

5. Luminaire et/ou camera intégrés (1) selon la revendication 4,
**caractérisé en ce que**
le segment en arceau (58) est installé coudé par rapport au segment de ressort hélicoïdal (52), et
le segment en arceau (58) s'applique contre la paroi latérale (15, 16, 17, 18) respective.

6. Luminaire et/ou camera intégrés (1) selon l'une des revendications 4 ou 5,
**caractérisé en ce que**
le segment en arceau (58) est poussé contre la paroi latérale (15, 16, 17, 18) respective.

7. Luminaire et/ou camera intégrés (1) selon l'une des revendications précédentes,
**caractérisé en ce que**
l'évidement (66) forme au moins une contredépouille (65) reliant le côté arrière (14) à l'évidement (60).

8. Luminaire et/ou camera intégrés (1) selon l'une des revendications précédentes,
**caractérisé en ce que**
la butée (20) est réalisée sur le côté avant (12) comme une bride, de préférence périphérique (22).

9. Luminaire et/ou camera intégrés (1) selon la revendication 8,
**caractérisé en ce que**
un évidement (23) adapté au moyen de fixation (50) est sur le côté de la bride périphérique (22) tournée vers le côté arrière.

10. Luminaire et/ou camera intégrés (1) selon l'une des revendications précédentes,
**caractérisé en ce que**
le boîtier (10) a au moins un luminaire (40), et
le côté avant (11) a une ouverture de boîtier (42) par laquelle la lumière émise par le luminaire (40) peut sortir du boîtier (10).

11. Luminaire et/ou camera intégrés (1) selon l'une des revendications précédentes,
**caractérisé en ce que**
plusieurs luminaires (40) sont prévus suivant une trame et les moyens d'éclairage (40) sont mobiles dans un plan.

12. Luminaire et/ou camera intégrés (1) selon l'une des revendications précédentes,
**caractérisé en ce que**
une plaque (45) transparente à la lumière ayant un segment optique pour au moins un moyen d'éclairage (40) est logée dans l'ouverture de boîtier (42).

13. Luminaire et/ou camera intégrés (1) selon l'une des revendications précédentes,
**caractérisé en ce que**
la caméra (30) est logée dans l'ouverture de boîtier (42).
